# EUROPÄISCHE PATENTSCHRIFT

(11) **EP 0 494 920 B1**
(45) Veröffentlichungstag und Bekanntmachung des Hinweises auf die Patenterteilung: **07.12.1994**
(21) Anmeldenummer: 90914728.2
(22) Anmeldetag: 26.09.1990
(51) Int. Cl.: C04B 14/42, C04B 18/04

(54) **ZEMENT-MATRIX UND VERFAHREN ZUR HERSTELLUNG**
CEMENT MATRIX AND PROCESS FOR ITS PRODUCTION
MATRICE DE CIMENT ET PROCEDE DE FABRICATION

(30) Priorität: 30.09.1989 DE 3932908
(43) Veröffentlichungstag der Anmeldung: 22.07.1992
(73) Patentinhaber: MATERIAUX DE CONSTRUCTION INTERNATIONAL, 92400 Courbevoie (FR)
(72) Erfinder: PFEIFER, Manfred, D-6914 Rauenberg (DE)
(74) Vertreter: Bockhorni, Josef, Dipl.-Ing.
(86) Internationale Anmeldenummer: EP9001627
(87) Internationale Veröffentlichungsnummer: WO9104953

(56) Entgegenhaltungen:
- US-A- 3 834 916
- US-A- 3 880 664
- US-A- 3 969 567
- US-A- 4 504 320
- US-A- 4 793 861

## Beschreibung

Die vorliegende Erfindung betrifft eine Zement-Matrix und deren zweckmäßige Herstellung, insbesondere für glasfaserverstärkten Zement oder Beton, bestehend aus einem Standard- oder Spezialzement und Zusätzen in fester oder flüssiger Form zur Bindung des sich beim Hydratationsvorgang bildenden Calciumhydroxids.

Es ist bekannt, daß Glasfasern in eine Zement-Matrix eingearbeitet werden, um die mechanischen Eigenschaften und Langzeitbeständigkeit des Endproduktes zu erhöhen. Zementgebundene Baustoffe weisen eine hohe Druckfestigkeit auf. Zur Verbesserung der Zug-, Biegezug- und Schlagfestigkeit werden im Verhältnis zu ihrer Länge dünne Fasern verwendet, besonders optimale Eigenschaften weisen Glasfasern auf. Es sind jedoch nur spezielle alkalibeständige Glasfasern verwendbar, da normale Glasfasern vom Zement sofort angegriffen werden und ein großer Festigkeitsverlust innerhalb kurzer Zeit festzustellen ist. Wenn glasfaserverstärkte Betonprodukte der freien Bewitterung ausgesetzt werden, besonders einer warmen, feuchten Umgebung, führt dies unweigerlich kurzfristig zu einem Abfall der Langzeitbeständigkeit und der mechanischen Eigenschaften, einschließlich einer bedeutenden Verminderung der Festigkeitseigenschaften und eines nahezu vollständigen Verlustes der Bruchdehnung. Die Langzeitbeständigkeit tragender Teile oder Elemente aus derartig glasfaserverstärkten Materialien kann daher nicht gewährleistet werden. Eine Verbesserung konnte - wie vorstehend erwähnt - mit alkalibeständigen bzw. laugenfesten (AR-) Glasfasern erzielt werden, die Zirkonoxid bzw. Zirkonerde (ZrO₂) enthalten und die einem Alkaliangriff einen erhöhten Widerstand entgegensetzen. Wie inzwischen aber erkannt wurde, unterliegen auch die alkalibeständigen Glasfasern einem Alterungsprozeß, so daß gemäß veröffentlichten Untersuchungsberichten nach 20 bis 30 Jahren die Wirksamkeit der Glasfasern nicht mehr erkennbar ist, bzw. sich bis auf die sogenannte Matrixfestigkeit reduziert.

Der Abfall der Langzeitbeständigkeit bei glasfaserverstärktem Beton liegt hauptsächlich an der Ablagerung des Calciumhydroxid in den Zwischenräumen der Glasfaserbündel und auf den einzelnen Fasern bzw. Filamenten. Wegen der vorgenannten Probleme, ist die Anwendung bzw. der Einsatz von glasfaserverstärkten Materialien dann nicht möglich, wenn die Langzeitbeständigkeit extrem wichtig ist.

Über viele Jahre wurde in verschiedenen Richtungen gearbeitet, um dem Rückgang der Faserfestigkeit und der Versprödung des Glasfaserzements entgegenzuwirken. Es handelte sich um eine Verwendung von Polymerzusätzen, Einsatz von Zementen mit geringem Alkali-Gehalt, Zusätze von Flugasche, Mikrosilica, Puzzolanen, Metakaolin und Hochofenschlacke. Jedoch wurde dabei nie mit - zur vollständigen Abbindung des Ca(OH)₂ - ausreichenden Mengen gearbeitet.

Die Verwendung beispielsweise von Zement mit niedrigem Alkalianteil verlangsamt allerdings nur den Abfall der Langzeitbeständigkeit, vermeidet ihn jedoch nicht. Ähnliches gilt für die Beimengung von Acrylaten bzw. Acrylestern, die dem Abfall der Langzeitbeständigkeit entgegenwirken, ihn aber ebenfalls nicht verhindern können. Acrylate sind zudem sehr teuer und führen zu einem deutlichen Kostenanstieg von glasfaserverstärktem Beton.

Um das Problem der Langzeitbeständigkeit zu lösen, wurden die Glasfasern auch mit Polymeren und Mikrosilica imprägniert bzw. beschichtet. Mikrosilica ist reaktives, amorphes Siliciumdioxid, das aus den Abgasen bzw. Rauchgasen bei der Herstellung von Silicium oder Ferrosilicium im Schmelzofen gewonnen werden kann. Auch diese Versuche konnten das Problem der Langzeitbeständigkeit nicht befriedigend lösen. Ein weiterer Nachteil hierbei ist der zusätzliche Beschichtungsvorgang, der auch zu einem Kostenanstieg bei der Produktion von glasfaserverstärktem Beton führt. Es wurden auch Versuche durchgeführt, wobei man ein Material beimengte, das mit dem Calciumhydroxid beim Hydratationsvorgang reagiert oder es bindet.

Einige Beispiele für solche Beimengungen waren Flugasche und Mikrosilica. Es ist aber bisher mit allen genannten Versuchen und Methoden nicht gelungen, das Problem der Langzeitbeständigkeit zufriedenstellend zu lösen, da beispielsweise Flugasche oder Mikrosilica beim Hydratationsvorgang nur einen Teil des entstehenden Calciumhydroxids gebunden haben. Wenn größere Mengen zugefügt wurden, um das gesamte Calciumhydroxid zu binden, hatte dies zur Folge, daß der Frischbeton nicht verarbeitbar war.

Alle vorgeschlagenen Modifikationen der Matrix führten nur zu graduellen Verbesserungen des Langzeitverhaltens, wesentliche positive Verbesserungen konnten aber nicht erzielt werden. Es ist daher Aufgabe der vorliegenden Erfindung, die Langzeitbeständigkeit von glasfaserverstärktem Zement bzw. Beton zu verbessern, wobei auch das Ausblühen gehemmt und die Herstellung von Bauteilen hoher Dichtigkeit ermöglicht werden soll, die auch für neue Einsatzgebiete auf dem Zement-Technologiesektor geeignet sein sollen.

Die Lösung der gestellten Aufgabe gelingt erfindungsgemäß durch die im Kennzeichnungsteil des Anspruchs 1 angegebene Zusammensetzung. Diese ist dadurch gekennzeichnet, daß die Gesamtmenge an Zusätzen einzeln oder in Kombination mindestens äquivalent der benötigten Menge zur Bindung oder Reaktion des bei der Hydratation gebildeten Calciumhydroxids ist, daß als Zusätze jeweils allein oder in Kombination aus Rauchgasen der Silicium- oder Ferrosiliciumherstellung gewonnenes reaktives Siliciumdioxid, Metakaolin, Diatomeenerde und/oder Pozzuolanerde enthalten sind und daß in Verbindung mit einem oder mehreren der vorgenannten Zusatzstoffe Hochofenschlacke in einer Menge zwischen 35 und 80 %, vorzugsweise zwischen 60 und 70 % (gemessen am Zementgewicht) enthalten ist.

Mit der erfindungsgemäßen Zement-Matrix besteht nicht nur die Möglichkeit, glasfaserverstärkten Beton mit dauerhafter Langzeitbeständigkeit zu produzieren. Die Zement-Matrix hat auch einige weitere Vorteile gegenüber einer herkömmlichen Zement-Matrix aufzuweisen. Durch das fehlende Ca(OH)₂ ist diese Zement-Matrix verwitterungsbeständiger und verfügt über ein höheren Wirkungsgrad beim Pigmentieren. Dies bedeutet, daß statt wie bisher die Dachziegel mit Farbe zu beschichten, nun ein pigmentierter Beton mit dieser Matrix hergestellt und verwendet werden kann. Vor allem bleiben mit Pigmenten durchgefärbte Bauteile farbintensiv und auf eine zusätzliche Farbbeschichtung kann in den meisten Fällen verzichtet werden. Der oder die Matrixzusätze können in fester und/oder flüssiger Form der Grundmatrix zugemischt werden, so daß man eine vorgemischte Matrix erhält, der für die Verarbeitung nur noch Wasser und Betonzusatzmittel hinzuzufügen sind. Durch die angegebenen Zusätze von reaktivem Siliciumdioxid, Metakaolin, Diatomeenerde und/oder Pozzuolanerde kann eine optimale Abstimmung der Zusätze in Bezug auf die gegebenen Eigenschaften der Grundmatrix erfolgen. Wenn man einzelne oder eine Kombination der Ca(OH)₂ bindenden Komponenten verwendet, ist es möglich eine Zement-Matrix zu erzeugen, die über gute Verarbeitungseigenschaften in frischem Zustand verfügt und wobei das ganze entstandene Ca(OH)₂ von den Ca(OH)₂ bindenden Komponenten gebunden oder zur weiteren Reaktion geführt wird. Herkömmliches Füllmaterial z.B. Sand, kann in dieser Matrix ebenfalls verwendet werden. Die kalkbindenden Zusatzstoffe müssen einzeln oder in Kombination ein Äquivalent zu dem bei der Hydratation von Portlandzement sich bildendem Calciumhydroxid, das ca. 25 Gew. % bezogen auf das Zementgewicht ausmacht. Versuche zeigten, daß mit den Stoffen SiO₂ (reaktiv), Metakaolin, Diatomeenerde und Pozzuolanerde allein zwar die gewünschte Wirkung unter der Voraussetzung der Äquivalentbildung zum Calciumhydroxid erreicht werden kann, daß diese Kombination aber Nachteile bezüglich der Wirtschaftlichkeit mit sich bringt.

Besonders kostengünstig ist es daher, wenn in Verbindung mit einem oder mehreren der vorgenannten Zusatzstoffe Hochofenschlacke enthalten sind. Die Calziumhydroxid (Ca(OH)₂) bindenden Komponenten verfügen über verschiedene Bindungseigenschaften. Die Ca(OH)₂ Bindungsfähigkeit in % Gewichtsanteil beträgt beispielsweise bei Metakaolin ca. 65, amorphem Quarzdampf ca. 45, Hochofenschlacke ca. 6 und Flugasche ca. 12. Während des Hydratationsvorgangs von Portlandzement ensteht ca. 25 Gewichts- % Ca(OH)₂ (bezogen auf das Zementgewicht). Dadurch wäre es erforderlich, um das gesamte Ca(OH)₂ - das während des Hydratationsvorgangs von 100 g Portlandzement entsteht - vollständig zu binden, beispielsweise mindestens die folgenden Mengen bzw. Gewichtsanteile an Zusätzen hinzuzusetzen: reaktives SiO₂ 55 % Gewichtsanteil oder 55 g; Hochofenschlacke 415 % Gewichtsanteil oder 415 g; Flugasche 208 % Gewichtsanteil oder 208 g. Die Erfindung sieht aus verarbeitungstechnischen Gründen zweckmäßigerweise die Verwendung von mehreren Ca(OH)₂ bindenden Komponenten vor. Besonders günstig und wirtschaftlich hat sich dabei als Ca(OH)₂ bindende Komponente Hochofenschlacke erwiesen. Die benötigte Hochofenschlackenmenge liegt dabei zwischen 35 und 80 % Gewichtsanteil (gemessen am Zementgewicht). Es ist möglich und zweckmäßig, diese Hochofenschlacke schon bei der Herstellung des Standardzementes beizumischen. Diese Zementtype wird Hochofenzement genannt und ist im Handel erhältlich. Die andere Ca(OH)₂ bindende Komponente wird in der erforderlichen Menge zugefügt, um das gesamte Ca(OH)₂ während des Hydratationsvorgangs zu binden.

In einer weiteren Ausführungsform bzw. Gestaltungsmöglichkeit kommt reaktives Siliciumdioxid in einer Menge zwischen 50 - 90 % (bezogen auf Portlandzement) zum Einsatz, die übrigen Zusatzstoffe bilden einzeln oder in Kombination dabei die erforderliche Restmenge an Calciumhydroxid bindenden Stoffen. Hiermit wurden sehr gute Resultate erzielt und es konnten bei allen bekannten Zementen hervorragende Resultate erzielt werden.

Verfahrenstechnisch wird die Aufgabe der Erfindung dadurch gelöst, daß das als Zusatz verwendete reaktive Siliciumdioxid aus den Rauchgasen eines Schmelzofens bei der Silicium- oder Ferrosiliciumherstellung gewonnen wird, wobei Siliciumdioxid reduziert und das Reduktionsprodukt in Luft während der Ausdünstungsphase wieder oxidiert wird. Der chemische Hauptbestandteil des amorphen Quarzdampfes ist Silicimdioxid, das im allgemeinen mit 85 % Gewichtsanteil vorhanden ist. Das Material ist amorph und hat eine Dichte von 2,10 - 2,60 g/cm³ und die spezifische Oberfläche beträgt 15 - 25 m²/g. Die Partikel sind in hohem Maße kugelförmig (sphärisch) wobei mit 90 % Gewichtsanteil die Hauptpartikel eine Größe von weniger als 1 Mikron aufweisen. Ein solches Siliciumprodukt ist handeisüblich.

Die Erfindung wird anhand der folgenden Beispiele noch näher erläutert.

### Beispiel 1

Ein Hochofenzement bestehend aus 50 % Hochofenschlacke und 50 % Portlandzement wurde für dieses Beispiel eingesetzt. Der Calciumanteil des Hochofenzements betrug ca. 49 % Gewichtsanteil, dies entspricht 12,5 % Ca(OH)₂ bezogen auf das Zementgewicht. Die Matrixmischung wurde folgendermaßen zusammengesetzt: 20 % reaktives Siliciumdioxid aus den Rauchgasen im Schmelzofen bei der Silicium- oder Ferrosiliciumherstellung, ferner 60 % Flugasche und 100 % Quarzsand wurden dem Zement im trockenen Zustand beigemengt. Alle % Angaben basieren auf dem Gewicht von dem Hochofenzement. Die trockenen Zutaten wurden mit einem herkömmlichen Mischer für ca. 30 Sekunden gemixt. Ein sulfoniertes Kondensat aus Melamin und Methanal mit 3 % Gewichtsanteil des Zementes wird beigefügt als Entwässerungsmittel (wasserreduzierendes Mittel), zusammen mit der benötigten Menge Wasser um ein Wasser /Zementverhältnis von 0,50 zu erzielen. Ferner wurden Versuchsproben mit alkalibeständigen Glasfasern nach folgendem Verfahren hergestellt: In eine Form mit den Abmessungen Länge 1000 mm, Breite 60 mm, Höhe 10 mm wurde eine 0,5 mm dicke Schicht der vorbeschriebenen Matrix gegossen. Ein aufgespleißter Glasfaserroving (Glasfaserstrang) in einer Breite von 60 mm wurde darauf gelegt. Darauf wurde eine ganz dünne Schicht der Matrix gegossen, gerade genug, um die Fasern zu überdecken. Dann wurde eine zweite Schicht Glasfaserroving aufgelegt. Der Vorgang wiederholte sich, bis vier Glasfaserschichten in die Matrix eingebettet waren. Die gesamte Dicke der vier Glasfaserschichten durfte nicht mehr als 1 mm betragen. Die Form wurde dann mit Matrixmasse aufgefüllt. Die Versuchsproben wurden nach 24 Stunden entformt und in einem 20 Grad Celsius warmen Wasserbad für 28 Tage ausgehärtet. Die Proben wurden 1, 3, 7 und 14 Tage einem beschleunigten Alterungsvorgang in einem 80 Grad Celsius heißen Wasserbad unterworfen. Nach diesem Vorgang wurden die Versuchsproben auf Biegezugfestigkeit unter Anwendung des herkömmlichen Vier- Punkt- Biegezugfestigkeitstest untersucht. Es zeigte sich deutlich, daß keine Minderung der Biegezugfestigkeit festzustellen war, selbst nach 14 Tagen nicht, wobei der Wert konstant 21 N/mm² betrug. Dies bedeutet, daß die Anwendung der Erfindung und der beschriebenen Mischung einen Abfall der Langzeitbeständigkeit völlig ausschließt.

### Beispiel 2

Ein Hochofenzement bestehend aus 70 % Hochofenschlacke und 30 % Portlandzement (Gewicht) wurde für dieses Beispiel genommen. Der Calciumanteil des Hochofenzements betrug ca. 51 %, dies entspricht 6,3 % Ca(OH)₂ bezogen auf das Zementgewicht. Die Matrixmischung wurde folgendermaßen zusammengesetzt: 20 % reaktives Siliciumdioxid aus den Rauchgasen bei der Silicium- oder Ferrosiliciumproduktion und 150 % Quarzsand werden dem Zement im trockenen Zustand beigemengt. Zweckmäßigerweise können auch 5 % Metakaolin hinzugefügt werden. Alle % Angaben basieren auf dem Gewicht von Hochofenzement. Die trockenen Zutaten wurden mit einem herkömmlichen Mischer für ca. 30 Sekunden gemixt. Sulfonierte Kondensate aus Melamin und Methanal mit 3 % Gewichtsanteil des Zementes wurden zugesetzt als Verflüssigungsmittel, zusammen mit der benötigten Menge Wasser um ein Wasser/Zementverhältnis von 0,40 zu erzielen. Diese Mischung wurde mit dem gleichen Verfahren zubereitet, wie in Beispiel 1 beschrieben. Es ergaben sich mit dieser Matrix ebenfalls sehr gute Verarbeitungseigenschaften. Wiederum wurden Versuchsproben mit alkalibeständigem Glasfasermaterial hergestellt, nach dem gleichen Verfahren wie bereits beschrieben. Die Proben wurden für 1, 3, 7, 14, 20 und 27 Tage einer beschleunigten Alterung in einem 80 Grad Celsius heißen Wasserbad unterzogen, danach wurden die Proben auf Biegezugfestigkeit getestet. Es zeigte sich ebenfalls deutlich, daß keine Minderung der Biegezugfestigkeit von 22 N/mm² festzustellen war.

## Patentansprüche

1. Zement-Matrix, insbesondere für glasfaserverstärkten Zement oder Beton, bestehend aus einem Standard- oder Spezialzement und Zusätzen in fester oder flüssiger Form zur Bindung des sich beim Hydratationsvorgang bildenden Calciumhydroxids, **dadurch gekennzeichnet**, daß die Gesamtmenge an Zusätzen einzeln oder in Kombination mindestens äquivalent der benötigten Menge zur Bindung oder Reaktion des bei der Hydratation gebildeten Calciumhydroxids ist, daß als Zusätze jeweils allein oder in Kombination aus Rauchgasen der Silicium- oder Ferrosiliciumherstellung gewonnenes reaktives Siliciumdioxid, Metakaolin, Diatomeenerde und/oder Pozzuolanerde enthalten sind und daß in Verbindung mit einem oder mehreren der vorgenannten Zusatzstoffe Hochofenschlacke in einer Menge zwischen 35 und 80 %, vorzugsweise zwischen 50 und 70 % (gemessen am Zementgewicht) enthalten ist.

2. Zement-Matrix nach Anspruch 1, **dadurch gekennzeichnet**, daß reaktives Siliciumdioxid in einer Menge zwischen 50 und 90 % (bezogen auf Portlandzement) zum Einsatz kommt.

3. Verfahren zur Herstellung einer Zement-Matrix nach Anspruch 1 oder 2, **dadurch gekennzeichnet**, daß das als Zusatz verwendete reaktive Siliciumdioxid aus den Rauchgasen eines Schmelzofens bei der Silicium- oder Ferrosiliciumherstellung gewonnen wird, wobei Siliciumdioxid reduziert wird und das Reduktionsprodukt in Luft während der Ausdünstungsphase wieder oxidiert wird und das dabei entstehende Siliciumdioxid mit einer Dichte von 2,10 bis 2,60 g/cm³ sowie mit einer spezifischen Oberfläche von 15 bis 25 m²/g anfällt.

## Claims

1. Cement matrix, in particular for glass fibre reinforced cement or concrete, consisting of a standard or special cement and additives in solid or liquid form for binding of the calcium hydroxide forming during the hydration process, **characterised in that** the total amount of additives individually or in combination is at least equivalent to the amount required for binding or reaction of the calcium hydroxide formed during the hydration, that reactive silicon dioxide obtained from the flue gases of silicon or ferrosilicon manufacture, metakaolin, diatomaceous earth and/or pozzolana are contained as additives either singly or in combination and that blast-furnace slag is contained in combination with one or more of the aforementioned additives in an amount between 35 and 80%, preferably between 50 and 70%, measured on the cement weight.

2. Cement matrix according to claim 1, **characterised in that** reactive silicon dioxide is used in an amount between 50 and 90% (calculated on portland cement).

3. Method for manufacturing a cement matrix according to claim 1 or 2, **characterised in that** the reactive silicon dioxide used as an additive is obtained from the flue gases of a melting furnace during silicon or ferrosilicon manufacture, in the course of which silicon dioxide is reduced and the reduction product is oxidized again in air during the exhalation phase and the silicon dioxide thereby produced is obtained with a density of 2.10 to 2.60 g/cm³ and with a specific surface of 15 to 25 m²/g.

## Revendications

1. Matrice de ciment notamment de ciment ou de béton renforcé par des fibres de verre, formée d'un ciment normal ou spécial et d'additifs à l'état solide ou liquide pour la liaison de l'hydroxyde de calcium formée par l'opération d'hydratation, matrice caractérisée en ce que la quantité totale en additifs, prise séparément ou en combinaison, correspond à au moins l'équivalent de la quantité nécessaire pour lier ou faire réagir l'hydroxyde de calcium formé par hydratation, et en ce qu'en additifs on a chaque fois isolément ou en combinaison, du dioxyde de silicium obtenu à partir des gaz de fumées provenant de la fabrication de silicium ou de ferrosilicium, du métakaolin, de la terre à diatomées et/ou de la pouzzolane, et en ce qu'en liaison avec un ou plusieurs des additifs ci-dessus, on utilise les scories de hauts fourneaux suivant une quantité comprise entre 35 et 80 %, de préférence entre 50 et 70 % mesurée par rapport au poids du ciment.

2. Matrice de ciment selon la revendication 1, caractérisée en ce que le dioxyde de silicium réactif est utilisé suivant une quantité comprise entre 50 et 90 % (par rapport au ciment Portland.

3. Procédé de fabrication d'une matrice de ciment selon la revendication 1 ou 2, caractérisé en ce que le dioxyde de silicium réactif utilisé comme additif provient des gaz de fumées d'un four de fusion de fabrication de silicium ou de ferrosilicium, selon lequel on réduit le dioxyde de silicium et on oxyde de nouveau le produit de réduction, dans l'air pendant la phase de vaporisation et en ce que le dioxyde de silicium ainsi formé correspond à une densité de 2,10 jusqu'à 2,60 g/cm³ et à une surface spécifique de 15 - 25 m²/g.
